# EUROPÄISCHE PATENTSCHRIFT

(11) **EP 1 703 355 B1**
(45) Veröffentlichungstag und Bekanntmachung des Hinweises auf die Patenterteilung: **30.05.2012**
(21) Anmeldenummer: 05003041.0
(22) Anmeldetag: 14.02.2005
(51) Int. Cl.: G05D 16/20, F04D 27/02, F04C 14/06, F04B 49/02

(54) **Steuervorrichtung, insbesondere Druckschalter**
Control device, in particular a pressure switch
Dispositif de régulation, en particulier un pressostat

(43) Veröffentlichungstag der Anmeldung: 20.09.2006
(73) Patentinhaber: Truma Gerätetechnik GmbH & Co. KG, 85640 Putzbrunn (DE)
(72) Erfinder: Schorisch, Ralf, 85604 Zorneding (DE); Beer, Wilhelm, 94250 Achslach (DE)
(74) Vertreter: Müller - Hoffmann & Partner

(56) Entgegenhaltungen:
- EP-A- 1 255 174
- US-A- 5 769 134
- US-B1- 6 354 805

## Beschreibung

Die Erfindung betrifft eine Steuervorrichtung, insbesondere einen Druckschalter zum Steuern der Energieversorgung eines elektrischen Verbrauchers, beispielsweise einer elektrisch betriebenen Pumpe.

Zur Steuerung von Pumpen in Wassersystemen von Freizeitmobilen, wie z. B. Wohnwagen, Reisemobilen oder Booten werden gewöhnlich entweder MikroSchalter in den Endverbrauchern wie beispielsweise Wasserhähnen oder Duschköpfen, oder auch Druckschalter eingesetzt. Der Druckschalter schaltet im Idealfall bei einem Einschaltdruck im Wasserleitungssystem die Pumpe ein und bei Erreichen eines bei geschlossenen Verbrauchern vorliegenden höheren Ausschaltdrucks wieder aus. Als Versorgungsspannung der Pumpe dient beispielsweise in Wohnwagen und Reisemobilen eine Bordbatterie mit 12 V Bordspannung.

Verschiedene Ladezustände der Bordbatterie sowie weitere Versorgungszustände führen zu verschiedenen hydraulischen Pumpenleistungen. Somit schwankt der von der Pumpe bereitgestellte maximal erreichbare Wasserdruck in Abhängigkeit von der elektrischen Versorgungsspannung. Änderungen der Versorgungsspannung können mehrfache Auswirkungen auf den Druckschalter haben.

Wird beispielsweise das Wasserversorgungssystem eines Wohnwagens oder eines Reisemobils über das öffentliche Stromversorgungsnetz oder einen entsprechenden Generator mit elektrischer Energie versorgt, so kann die Versorgungsspannung verschiedene Werte annehmen. Eine Versorgungsspannung von 12 V oder 13,8 V liegt bei der Energieversorgung über einen Transformator oder ein Ladegerät vor. Bei einem Druckschalter mit konstantem Ausschaltdruck sind hierbei so genannte oszillierende Schaltvorgänge zu erwarten. Dabei erzeugt die Pumpe auf Grund der großen Versorgungsspannung und der damit verbundenen großen hydraulischen Leistung trotz der Wasserentnahme an einem Verbraucher einen zum Ausschaltdruck der Pumpe vergleichsweise größeren Betriebsdruck. Infolgedessen schaltet die Pumpe während der Wasserentnahme ab, obwohl am Verbraucher noch Wasser entnommen wird. Dieses Verhalten wird durch den Strömungswiderstand im Wasserleitungssystem noch unterstützt. Bei abgeschalteter Pumpe und anhaltender Wasserentnahme sinkt der Druck jedoch sehr schnell ab, woraufhin die Pumpe wieder eingeschaltet wird. Dieser Vorgang wiederholt sich nun fortlaufend, was einen pulsierenden Wasserstrahl und einen eingeschränkten Wasservolumenstrom mit sich bringt.

Erfolgt die elektrische Energieversorgung des Wasserversorgungssystems über eine Bordbatterie, so liegt beispielsweise bei frisch geladener Batterie eine anfängliche Bordspannung von etwa 13,8 V vor. Eine derart hohe Spannung kann bei konstantem Ausschaltdruck in der Regel zu den oben beschriebenen oszillierenden Schaltvorgängen führen.

Da während des Pumpenbetriebs durch Energieentnahme aus der Bordbatterie die Bordspannung, d. h. die Versorgungsspannung, sinkt, ist es möglich, dass die Pumpe schließlich wegen zu geringer Versorgungsspannung und damit zu geringer hydraulischer Leistung den Ausschaltdruck im Wasserleitungssystem nicht mehr zur Verfügung stellen kann. Infolgedessen schaltet der Druckschalter trotz möglicherweise abgeschalteten Verbrauchern die Pumpe nicht mehr aus.

Zusätzlich können beim Laden der Batterie sowie einem auf einen geringen Ausschaltdruck eingestellten Druckschalter oszillierende Schaltvorgänge auftreten.

Derzeit erhältliche Druckschalter weisen entweder eine fest vorgegebene Schaltschwelle oder eine manuell verstellbare Schaltschwelle auf. Die Schaltschwelle ist durch einen Drucksignal-Wert definiert, der ein An- oder Abschalten der Pumpe verursacht. Bei fest vorgegebener Schaltschwelle sind Einschaltdruck und Ausschaltdruck konstant, so dass die eingangs beschriebenen Probleme auftreten können. Bei einem Druckschalter mit manuell verstellbarer Schaltschwelle lässt sich der Ausschaltdruck zwar beispielsweise per Handrad einstellen. Eine Änderung der Bordspannung erfordert jedoch somit ein manuelles Nachjustieren des Ausschaltdrucks, was mit einem erheblichen Aufwand seitens des Nutzers verbunden ist.

Dokument EP 1 255 174 A1 beschreibt eine Vorrichtung zur Detektion des Wasserflusses einer Elektropumpe, die ein minimales Wasserreservoir benötigt und die keine mechanischen Probleme verursacht und zudem kostengünstig ist. Die Elektropumpe wird über einen Hauptschaltkreis versorgt, der an das Netzwerk angeschlossen ist und durch einen von einer CPU über einen Bus betriebenen Schalter gesteuert. Die CPU gehört zu einer elektronischen Schaltungsplatine, die über die Stromaufnahme des Motors sowie mittels der Druckmesseinrichtung der Pumpe den Beginn des Wasserflusses veranlasst. Die CPU reagiert auf Sensoren des aufgenommenen Stroms und auf die Druckmesseinrichtung zum Ein- und Ausschalten der Zufuhr von elektrischer Energie an den Motor.

Der Erfindung liegt die Aufgabe zugrunde, eine Steuerungvorrichtung, insbesondere einen Druckschalter anzugeben, die ein zum Steuern der Energieversorgung eines elektrischen Verbrauchers geeignetes Steuersignal ausgibt und Änderungen der Versorgungsspannung berücksichtigt, so dass die eingangs beschriebenen Probleme wie beispielsweise oszillierende Schaltvorgänge vermieden werden können.

Die Aufgabe wird durch eine Steuervorrichtung, insbesondere einen Druckschalter, mit den Merkmalen des unabhängigen Patentanspruchs 1 sowie ein Wasserversorgungssystem gemäß Anspruch 16 gelöst. Bevorzugte Ausführungsformen sind den abhängigen Ansprüchen zu entnehmen und werden in der weiteren Beschreibung erläutert.

Erfindungsgemäß wird eine Steuervorrichtung, insbesondere ein Druckschalter angegeben, mit einer ersten Eingangseinrichtung zum Erfassen eines von einem Drucksensor ausgegebenen und einem Druck entsprechenden Drucksignals, einer zweiten Eingangseinrichtung zum Anschließen an eine Versorgungs-spannung, einer Auswerteeinrichtung zum Auswerten des Drucksignals und eines der Versorgungsspannung entsprechenden Versorgungsspannungssignals und zum Erzeugen eines vom Drucksignal und vom Versorgungsspannungssignal abhängigen Steuersignals sowie mit einer Ausgabeeinrichtung zum Ausgeben des Steuersignals an eine Steuereinrichtung zum Steuern der Energieversorgung eines elektrischen Verbrauchers.

In vorteilhafter Weise erfasst die Eingangseinrichtung das Drucksignal drahtlos oder drahtgebunden. Hierzu dienen beispielsweise eine Empfangseinrichtung, ein Kabel oder auch eine weitere über einen Stecker und eine Steckdoseneinrichtung herstellbare elektrische Verbindung. Als zweite Eingangseinrichtung dient bevorzugt eine drahtgebundene elektrische Verbindung über Kabel, die ebenso über einen Stecker und eine Steckdoseneinrichtung hergestellt werden kann.

Die Auswerteeinrichtung wertet neben dem Drucksignal insbesondere das Versorgungsspannungssignal zum Erzeugen des Steuersignals aus. Eine Änderung der Versorgungsspannung führt somit zu einer Änderung des Versorgungsspannungssignals und wirkt sich damit auch auf die Erzeugung des Steuersignals aus. Das von der Auswerteeinrichtung an die Ausgabeeinrichtung ausgegebene Steuersignal wird beispielsweise einer als Leistungsschalter ausgeführten Steuereinrichtung zum An- und Ausschalten einer als elektrischer Verbraucher ausgeführten Pumpe zugeführt.

Die als Leistungsschalter ausgeführte Steuereinrichtung wird bevorzugt als Bipolartransistor oder Metall-Oxid-Halbleiter-Feldeffekttransistor (MOSFET) realisiert, wobei im Falle eines MOSFET das Steuersignal in vorteilhafterweise Weise als Gatesteuersignal zur Steuerung einer Kanalleitfähigkeit des MOSFET dient. bei geeigneter Wahl der Steuereinrichtung kann auf eine Kühlung verzichtet werden, was vorteilhaft zur Reduzierung von Platinengröße sowie Kosten führt.

In vorteilhafterweise Weise weist das von der Auswerteeinrichtung erzeugte Steuersignal einen minimalen Steuersignal-Wert auf, falls ein vom Drucksignal abhängiger Drucksignal-Wert größer als ein Schwellwert ist, wobei der Schwellwert vom Versorgungsspannungssignal-Wert abhängt. Der minimale Steuersignal-Wert dient bevorzugt zum Abschalten eines als Pumpe ausgeführten elektrischen Verbrauchers. Eine Verkleinerung der Versorgungsspannung führt zu einer Verkleinerung des Versorgungsspannungssignal-Werts und somit zu einer Verkleinerung des Schwellwerts, so dass ein kleinerer Drucksignal-Wert, d. h. ein kleinerer hydraulischer Druck, zum Ausschalten der Pumpe führt. Damit wird berücksichtigt, dass eine Reduzierung der Versorgungsspannung zu einer Reduzierung des von der Pumpe bereitgestellten bzw. erreichbaren Drucks, z. B. in der Wasserleitung eines Wasserversorgungssystems, führt. Der Gefahr einer nicht abschaltenden Pumpe bei zu hohem Ausschaltdruck wird so entgegengewirkt.

Folglich lassen sich Schwankungen der von der Versorgungsspannung abhängigen Pumpenleistung ausgleichen, weshalb Probleme wie oszillierende Schaltvorgänge oder auch dauerhafter Pumpenbetrieb vermieden werden können.

Der Schwellwert kann beispielsweise über einem Spannungsteiler mit anliegendem Versorgungsspannungssignal-Wert erzeugt werden. Dies ermöglicht es, der Auswerteeinrichtung einen Schwellwert zuzuführen, der kleiner ist als der Versorgungsspannungs-Wert. Der Drucksignal-Wert wird bevorzugt mit Hilfe einer Summierschaltung erzeugt, wobei ein dem Drucksignal-Wert entsprechender Knotenpunkt jeweils über einen Widerstand mit dem Drucksignal als auch einem Konstantspannungssignal verbunden ist. Es ist von Vorteil, die Amplitude des Konstantspannungssignals steuerbar zu gestalten, z. B. mit Hilfe eines Potentiometers. Somit ist sowohl der Schwellwert über den Spannungsteiler als auch der Drucksignal-Wert über die steuerbare Konstantspannungsquelle steuerbar. Damit kann beispielsweise der Druckschalter auf die Pumpe und das Wasserversorgungssystem abgestimmt werden.

Es ist von Vorteil, falls die Auswerteeinrichtung eine Vergleichseinrichtung aufweist, der der Schwellwert und der Drucksignal-Wert zum Erzeugen des Steuersignals zuführbar sind. Eine derartige Auswerteeinrichtung kann beispielsweise als Komparator ausgebildet sein, der den minimalen Steuersignal-Wert im Falle, dass der Drucksignal-Wert kleiner als der Schwellwert ist, bereitstellt. Das Steuersignal wird an die Ausgabeeinrichtung ausgegeben und kann beispielsweise mit dieser über ein Kabel verbunden sein.

Bei einer bevorzugten Ausführungsform erzeugt die Auswerteeinrichtung ein digitales Steuersignal, wobei das Steuersignal einen maximalen Steuersignal-Wert aufweist, falls der Drucksignal-Wert kleiner als der Schwellwert ist. Die beiden digitalen Steuersignal-Werte, nämlich ein minimaler und ein maximaler Steuersignal-Wert, werden der Steuereinrichtung bevorzugt zum Einschalten und zum Ausschalten des elektrischen Verbrauchers zugeführt. Der maximale Steuersignal-Wert führt beispielsweise bei einer als MOSFET ausgeführten Steuereinrichtung zu einem niederohmigen Einschaltwiderstand, so dass ein über die Steuereinrichtung mit der Versorgungsspannung verbundener elektrischer Verbraucher niederohmig mit der Versorgungsspannung verbunden ist. Bei einem minimalen Steuersignal-Wert ist der elektrische Verbraucher sehr hochohmig an die Versorgungsspannung angeschlossen, weshalb dieser mangels Energiezufuhr nicht betrieben werden kann.

Bei einer weiteren Ausführungsform erzeugt die Auswerteeinrichtung ein analoges Steuersignal, wobei der Steuersignal-Wert vom Schwellwert und vom Drucksignal-Wert abhängt, falls der Drucksignal-Wert kleiner als der Schwellwert ist. In vorteilhafter Weise dient ein Differenzwert zwischen Steuersignal-Wert und Drucksignal-Wert zur Erzeugung eines im Vergleich zum minimalen Steuersignal-Wert größeren Steuersignal-Werts, so dass die Pumpe beispielsweise schrittweise hoch- oder auch heruntergefahren werden kann. Ebenso ist ein Steuern einer mehrere Leistungsstufen aufweisenden Pumpe denkbar.

Besonders vorteilhaft ist es, falls der Schwellwert und der Drucksignal-Wert steuerbar sind. Dies ermöglicht insbesondere eine Abstimmung der Steuervorrichtung auf verschiedene Pumpen, z.B. mit jeweils verschiedenen Pumpenkennlinien, als auch von verschiedenen Wasserleitungssystemen und Endverbrauchern mit unterschiedlichen Strömungswiderständen.

Bei einer vorteilhaften Ausführungsform weist die Steuereinrichtung eine Verstärkereinrichtung zum Verstärken des Drucksignals auf. Eine derartige Verstärkung ist insbesondere dann von Vorteil, falls das in der Regel als Spannungssignal ausgebildete Drucksignal für eine nachfolgende Auswertung zu geringe Werte aufweist. Als Verstärkereinrichtung kann in vorteilhafter Weise ein Operationsverstärker eingesetzt werden, der das Drucksignal derart verstärkt, dass es zur Auswertung in der nachfolgenden Auswerteeinrichtung geeignet ist. Vorzugsweise liegen auswertbare Drucksignal-Werte im Volt-Bereich.

Vorteilhafterweise enthält die Verstärkereinrichtung ein Verstärkungsfaktor-Steuerelement. Dieses gewöhnlich als Potentiometer ausgebildete Verstärkungsfaktor-Steuerelement ermöglicht eine Einstellung der Verstärkung, so dass vom Drucksensor-Typ abhängige Steilheitstoleranzen ausgeglichen werden können. Ebenso kann bei Bedarf eine Offset-Korrektur des Drucksensors erfolgen.

Bei einer bevorzugten Ausführungsform weist die Steuervorrichtung eine zwischen die Auswerteeinrichtung und die Ausgabeeinrichtung geschaltete Zeitsteuereinrichtung auf, die das Steuersignal von der Auswerteeinrichtung empfängt und den minimalen Steuersignal-Wert wenigstens während einer bestimmten Ausschaltdauer und einen nicht minimalen Steuersignal-Wert mindestens während einer bestimmten Einschaltdauer an die Ausgabeeinrichtung ausgibt. Hierdurch können transiente Störungen der Versorgungsspannung unschädlich gemacht werden, indem sichergestellt wird, dass ein einmal eingeschalteter elektrischer Verbraucher während der bestimmten Einschaltdauer sicher eingeschaltet bleibt. Von Bedeutung ist dies beispielsweise, falls ein Anlaufstrom des elektrischen Verbrauchers derart große Spannungsabfälle in den Kabeln generiert, dass die Steuervorrichtung den elektrischen Verbraucher sofort wieder ausschalten würde. Ebenso lässt sich ein einmal ausgeschalteter elektrischer Verbraucher während der bestimmten Ausschaltdauer ausgeschaltet halten. Typischerweise liegen geeignete Einschaltdauern und Ausschaltdauern im Bereich von einigen Sekunden.

Bei einer vorteilhaften Ausführungsform weist die Vergleichseinrichtung eine Schwellwert-Hysterese auf. Einer derartigen Schwellwert-Hysterese liegt ein erster Schwellwert zugrunde, falls der Drucksignal-Wert ansteigt und es liegt ein zweiter Schwellwert zugrunde, falls der Drucksignal-Wert abfällt. Weist die Schwellwert-Hysterese einen im Vergleich zum zweiten Schwellwert größeren ersten Schwellwert auf, so wird der elektrische Verbraucher bei einem größeren Drucksignal-Wert eingeschaltet im Vergleich zum Drucksignal-Wert, bei dem der elektrische Verbraucher ausgeschaltet wird. Somit wirkt die Schwellwert-Hysterese wie die Zeitsteuereinrichtung, da ein einmal eingeschalteter elektrischer Verbraucher für diejenige Zeitdauer eingeschaltet bleibt, bis das Drucksignal auf einen zum Ausschalten des elektrischen Verbrauchers erforderlichen zweiten Schwellwert abgefallen ist. Es ist ebenso denkbar, dass die Steuervorrichtung sowohl die Zeitsteuereinrichtung als auch die Vergleichseinrichtung mit Schwellwert-Hysterese aufweist.

Bei einer besonders vorteilhaften Ausführungsform weist die Steuervorrichtung den mit der Eingangseinrichtung gekoppelten Drucksensor und die mit der Ausgangseinrichtung gekoppelte Steuereinrichtung als gemeinsame Bestandteile auf. Die als Druckschalter ausgeführte Steuervorrichtung kann eine Einheit bilden, z. B. in einem gemeinsamen Gehäuse, und dient somit zum Erfassen des Drucks, der Erzeugung des Steuersignals als auch zum Steuern der Energieversorgung des elektrischen Verbrauchers.

In vorteilhafter Weise ist der minimale Steuersignal-Wert zum Abschalten der Energieversorgung des elektrischen Verbrauchers geeignet. Somit dient der minimale Steuersignal-Wert beispielsweise zum Ausschalten der als Leistungsschalter ausgeführten Schaltereinrichtung, so dass eine sehr hochohmige Verbindung zwischen dem elektrischen Verbraucher und der Versorgungsspannung entsteht, da die Steuereinrichtung über den Leistungsschalter an die Versorgungsspannung angeschlossen ist.

Es ist ebenso von Vorteil, falls der maximale Steuersignal-Wert zum Einschalten der Energieversorgung des elektrischen Verbrauchers geeignet ist. Somit dient der maximale Steuersignal-Wert einer als Leistungsschalter ausgeführten Steuereinrichtung zum Einschalten des Leistungsschalters. Hierbei stellt der eingeschaltete Leistungsschalter eine niederohmige Verbindung zwischen dem elektrischen Verbraucher und der Versorgungsspannung bereit, so dass der elektrische Verbraucher über die Versorgungsspannung mit Energie versorgt wird.

Bei einer bevorzugten Ausführungsform ist der Drucksensor ein Absolutdrucksensor mit einer Eingabeeinrichtung für geografische Höhendaten. Somit können von einem atmosphärischem Umgebungsdruck abhängige Leistungsschwankungen der als elektrischer Verbraucher ausgeführten Pumpe mit Hilfe des Drucksensors ausgeglichen werden. Dadurch lassen sich beispielsweise auf Schwankungen des atmosphärischen Umgebungsdrucks zurückzuführende oszillierende Schaltvorgänge vermeiden.

Eine weitere vorteilhafte Ausführungsform zeichnet sich durch einen als Differenzdrucksensor ausgebildeten Drucksensor zum Erfassen einer Druckdifferenz zwischen einem Wasserdruck und einem atmosphärischen Umgebungsdruck aus. Dies ermöglicht es, im Gegensatz zu einem Absolutdrucksensor, auf eine Eingabeeinrichtung für geografische Höhendaten zu verzichten und vereinfacht die Handhabung des Drucksensors.

Bei einer vorteilhaften Ausführungsform sind ein oder mehrere Schaltungsteile in einem Mikrocontroller ausgeführt. Der Mikrocontroller ermöglicht beispielsweise, einen Abgleich auf Pumpe und Wasserversorgungssystem softwaregesteuert durchzuführen. Ein softwaregesteuerter Abgleich bringt den Vorteil mit sich, dass kein manuelles Einstellen, z.B. des Schwellwerts oder des Drucksignal-Werts, erforderlich ist. Stattdessen durchläuft der Mikrocontroller eine softwaregesteuerte Lernphase, während der Parameter des Wasserversorgungssystems mit Pumpe vermessen und abgespeichert werden. Hierzu kann beispielsweise durch Drücken eines Druckknopfs am Druckschalter ein Lernprogramm gestartet werden, wonach der Benutzer innerhalb einer bestimmten Zeit einen Endverbraucher wie beispielsweise einen Wasserhahn vollständig zu öffnen hat, wobei dieser nach einer bestimmten Haltezeit im geöffneten Zustand wieder zu schließen ist. Während dieses Vorgangs werden die für die Auswertung und die Erzeugung des Steuersignals notwendigen Parameter des Wasserversorgungssystems inklusive Pumpe ermittelt.

In vorteilhafter Weise weist ein Wasserversorgungssystem die erfindungsgemäße Steuervorrichtung auf sowie ein an einem Wasserspeicher angeschlossenes Wasserleitungssystem zur Versorgung von Verbrauchern mit Wasser, einer über die Steuereinrichtung an die Versorgungsspannung angeschlossenen elektrischen Pumpe zur Erhöhung des Wasserdrucks im Wasserleitungssystem und dem zur Erfassung des Wasserdrucks im Wasserleitungssystem vorgesehenen Drucksensor. Das Wasserversorgungssystem kann beispielsweise zur Wasserversorgung eines Wohnwagens, eines Reisemobils oder eines Bootes eingesetzt werden. Als Verbraucher sind Wasserhähne oder auch Duschköpfe denkbar.

Der im Wasserleitungssystem vorgesehene Drucksensor erfasst den Wasserdruck und gibt diesen an die Steuervorrichtung weiter, woraufhin die Auswerteeinrichtung in Abhängigkeit vom erfassten Wasserdruck und der zur Versorgung der elektrischen Pumpe als auch der Steuervorrichtung dienenden Versorgungsspannung ein Steuersignal erzeugt, das an die Steuereinrichtung zum Steuern der Energieversorgung, z.B. Ein- und Ausschalten, der Pumpe dient. Ein derartiges Wasserversorgungssystem bringt den Vorteil mit sich, dass durch Schwankungen der Versorgungsspannung hervorgerufene Schwankungen der Leistung der Pumpe und damit verknüpfte Probleme, wie beispielsweise oszillierende Schaltvorgänge, vermieden werden können.

Die Erfindung und insbesondere bestimmte Merkmale, Aspekte und Vorteile der Erfindung werden anhand der folgenden detaillierten Beschreibung in Verbindung mit den beigefügten Zeichnungen verdeutlicht.

Es zeigen:
- **Fig. 1**: ein schematisch dargestelltes Blockschaltbild der Verschaltung zwischen elektrischer Quelle, elektrischem Verbraucher, Drucksensor, Steuervorrichtung und Steuereinheit, und
- **Fig. 2**: eine vereinfachte schematische Darstellung eines Wasserversorgungssystems.

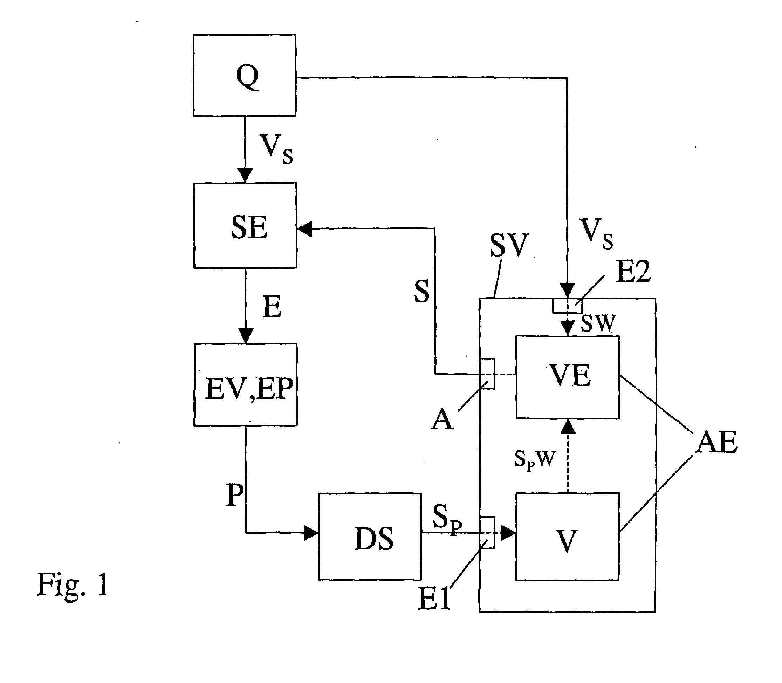

In Figur 1 ist ein schematisches Blockschaltbild mit Verschaltung einer bevorzugten Ausführungsform einer Steuervorrichtung SV gezeigt.

Eine elektrische Quelle Q, beispielsweise eine Bordbatterie eines eines Caravans, Wohnwagens oder Bootes, versorgt einen elektrischen Verbraucher EV, z. B. eine elektrische Pumpe EP, über eine Steuereinrichtung SE mit Energie E. Zur Steuerung der Energieversorgung des elektrischen Verbrauchers EV empfängt die Steuereinrichtung SE ein Steuersignal S. Die Steuereinrichtung SE ist bevorzugt als Leistungsschalter, beispielsweise als Bipolartransistor oder MOSFET, ausgeführt.

Der von der elektrischen Pumpe EP beispielsweise in einem Wasserleitungssystem mit Endverbrauchern erzeugte Druck P wird von einem am oder im Wasserleitungssystem angeordneten Drucksensor DS erfasst und als Drucksignal Sp an eine erste Eingangseinrichtung E1 der Steuervorrichtung SV ausgegeben. Die Eingangseinrichtung E1 kann das Drucksignal Sp drahtgebunden oder auch drahtlos empfangen.

Innerhalb der Steuervorrichtung wird das Drucksignal Sp von einer Verstärkereinrichtung V verstärkt. Die Verstärkereinrichtung V weist vorzugsweise ein nicht explizit dargestelltes Verstärkungsfaktor-Steuerelement und/oder ein Offsetkorrekturelement auf.

Das verstärkte Drucksignal Sp wird von der Verstärkungseinrichtung V ausgegeben und nach einer aus Gründen der Übersichtlichkeit nicht explizit dargestellten Signalaufbereitung als ein vom verstärkten Drucksignal Sp abhängiger Drucksignal-Wert SpW einer Vergleichseinrichtung VE zugeführt. Es sei darauf hingewiesen, dass der Drucksignal-Wert SpW als Momentaufnahme des der Vergleichseinrichtung VE momentan zugeführten Werts eines Signals zu verstehen ist. Die Momentaufnahme und die entsprechende Betrachtung von Signalwerten dient einer besseren Beschreibung der in der Vergleichseinrichtung VE durchgeführten Auswertung.

Die Vergleichseinrichtung VE ist vorzugsweise als Komparator mit zwei Eingängen ausgebildet und erzeugt das Steuersignal S. Zur Erzeugung des Steuersignals wird jedoch nicht lediglich der einem Eingang des Komparators zugeführte Drucksignal-Wert SpW ausgewertet, sondern zusätzlich die der Steuervorrichtung SV über eine zweite Eingangseinrichtung E2 zugeführte Versorgungsspannung VS der elektrischen Quelle Q, welche dem weiteren Eingang des Komparators nach einer aus Gründen der Übersichtlichkeit nicht explizit dargestellten Signalaufbereitung eines der Versorgungsspannung VS entsprechenden Versorgungsspannungsignals als Schwellwert SW zugeführt wird.

Es sei darauf hingewiesen, dass sowohl der vom Versorgungsspannungssignal abhängige Schwellwert SW als auch der vom Drucksignal abhängige Drucksignal-Wert SpW steuerbar sein können. Hierzu kann beispielsweise der Schwellwert SW über einen steuerbaren Spannungsteiler des Versorgungsspannungssignals abgegriffen werden.

Der dem zweiten Eingang des Komparators zugeführte Drucksignal-Wert SpW lässt sich beispielsweise durch Verbinden des zweiten Eingangs über Vorwiderstände mit sowohl einer vorzugsweise steuerbaren Konstantspannungsquelle als auch dem verstärkten Drucksignal Sp erzeugen.

Durch Auswerten des Versorgungsspannungssignals lassen sich nun mit Hilfe der Vergleichseinrichtung VE die durch Versorgungsspannungsschwankungen hervorgerufenen Druckschwankungen der elektrischen Pumpe EP ausgleichen. Die Vergleichseinrichtung gibt einen minimalen Steuersignal-Wert, vorzugsweise zum Ausschalten der elektrischen Pumpe, aus, falls der Drucksignal-Wert größer als der Schwellwert SW ist. Sinkt die Versorgungsspannung VS, so sinkt auch der von der elektrische Pumpe erzeugte Druck P. Da jedoch auch der Schwellwert SW sinkt, wird die Pumpe bei geringerem Druck abgeschaltet. Somit lässt sich vermieden, dass die Pumpe bei Absinken der Versorgungsspannung VS aufgrund eines nicht mehr erreichbaren Abschaltdrucks nicht mehr abgeschaltet werden kann.

Ebenso können durch Auswerten des Versorgungsspannungssignals oszillierende Schaltvorgänge vermieden werden. Eine Abstimmung der Steuervorrichtung auf die elektrische Pumpe sowie das Wasserleitungssystem kann beispielsweise über die weiter oben beschriebenen möglichen Steuerungen von Schwellwert SW, Drucksignal-Wert SpW oder auch des Verstärkungsfakors vorgenommen werden.

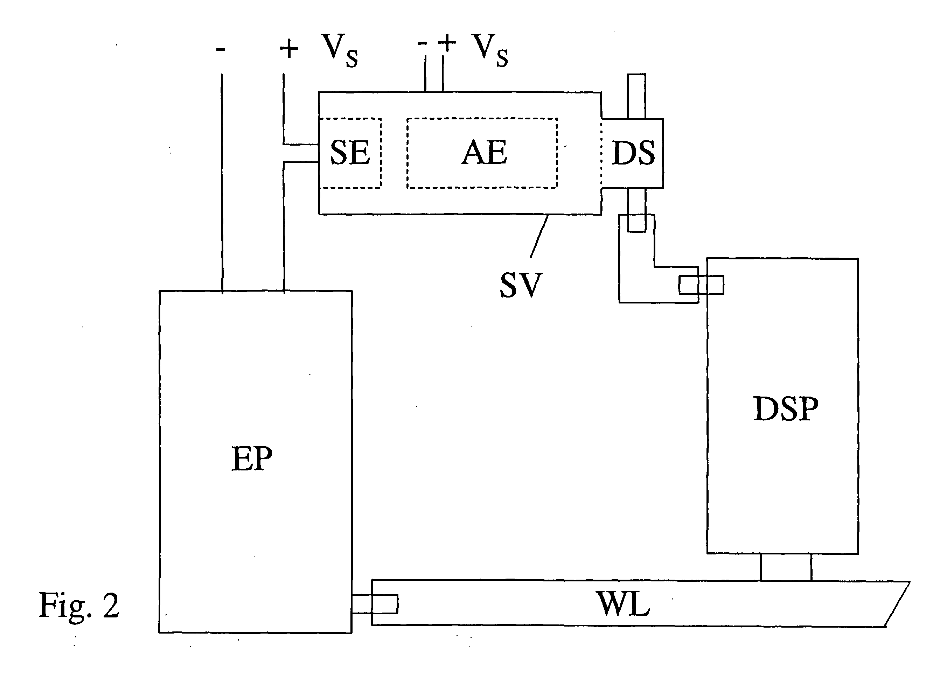

In Fig. 2 ist ein vereinfacht dargestelltes Wasserversorgungssystem mit der an das Wasserleitungssystem WL angeschlossenen elektrischen Pumpe EP dargestellt.

Die elektrische Pumpe EP ist über die Steuereinrichtung SE der Steuervorrichtung SV an die Versorgungsspannung Vs angeschlossen. Die Steuervorrichtung SV erfasst mit Hilfe des Drucksensors DS den Wasserdruck in den Wasserleitungen bzw. im Druckspeicher DSP des Wasserversorgungssystems, wobei die Auswerteeinrichtung abhängig vom Wasserdruck als auch von der Versorgungsspannung VS das Steuersignal S (nicht dargestellt) erzeugt, das der Steuereinrichtung SE zum Steuern der Energieversorgung der elektrischen Pumpe EP zugeführt wird. Somit lassen sich auf Schwankungen der Versorgungsspannung V_{S} zurückzuführende Druckschwankungen der elektrischen Pumpe EP, wie weiter oben detailliert beschrieben, ausgleichen.

## Patentansprüche

1. Steuervorrichtung (SV), insbesondere Druckschalter, mit:
- einer ersten Eingangseinrichtung (E1) zum Erfassen eines von einem Drucksensor (DS) ausgegebenen und einem Druck (P) entsprechenden Drucksignals (S_{P});
- einer zweiten Eingangseinrichtung (E2) zum Anschließen an eine Versorgungsspannung (VS);
- einer Auswerteeinrichtung (AE) zum Auswerten des Drucksignals (S_{P}) und eines der Versorgungsspannung (VS) entsprechenden Versorgungsspannungssignals und zum Erzeugen eines vom Drucksignal (Sp) und vom Versorgungsspannungssignal abhängigen Steuersignals (S); und mit
- einer Ausgabeeinrichtung (A) zum Ausgeben des Steuersignals (S) an eine Steuereinrichtung (SE) zum Steuern der Energieversorgung (EV) eines elektrischen Verbrauchers (V)
**dadurch gekennzeichnet, dass**
das Steuersignal (S) lediglich vom Drucksignal (SP) und vom Versorgungsspannungssignal als variablen Größen abhängt; und dass
das von der Auswerteeinrichtung (AE) erzeugte Steuersignal (S) einen minimalen Steuersignal-Wert aufweist, falls ein vom Drucksignal (S_{P}) abhängiger Drucksignal-Wert (SpW) größer als ein Schwellwert (SW) ist, wobei der Schwellwert (SW) lediglich vom Versorgungsspannungssignal-Wert als variabler Größe abhängt.

2. Steuervorrichtung (SV) nach Anspruch 1,
**dadurch gekennzeichnet, dass**
die Auswerteeinrichtung (AE) eine Vergleichseinrichtung (VE) aufweist,
der der Schwellwert (SW) und der Drucksignal-Wert (SpW) zum Erzeugen des Steuersignals (S) zuführbar sind.

3. Steuervorrichtung (SV) nach Anspruch 2,
**dadurch gekennzeichnet, dass**
die Auswerteeinrichtung (AE) ein digitales Steuersignal erzeugt, wobei das Steuersignal (S) einen maximalen Steuersignal-Wert aufweist, falls der Drucksignal-Wert (SpW) kleiner als der Schwellwert (SW) ist.

4. Steuervorrichtung (SV) nach Anspruch 2,
**dadurch gekennzeichnet, dass**
die Auswerteeinrichtung (AE) ein analoges Steuersignal erzeugt, wobei der Steuersignal-Wert vom Schwellwert (SW) und vom Drucksignal-Wert (SpW) abhängt, falls der Drucksignal-Wert (SpW) kleiner als der Schwellwert (SW) ist.

5. Steuervorrichtung (SV) nach einem der vorangehenden Ansprüche, **dadurch gekennzeichnet, dass**
der Schwellwert (SW) und der Drucksignal-Wert (SpW) steuerbar sind.

6. Steuervorrichtung (SV) nach einem der vorangehenden Ansprüche, **gekennzeichnet durch**
eine Verstärkereinrichtung (V) zum Verstärken des Drucksignals (S_{P}).

7. Steuervorrichtung (SV) nach Anspruch 6,
**dadurch gekennzeichnet, dass**
die Verstärkereinrichtung (V) ein Verstärkungsfaktor-Steuerelement aufweist.

8. Steuervorrichtung (SV) nach einem der vorangehenden Ansprüche, **gekennzeichnet durch**
eine zwischen die Auswerteeinrichtung (AE) und die Ausgabeeinrichtung (A) geschaltete Zeitsteuereinrichtung, die das Steuersignal (S) von der Auswerteeinrichtung (AE) empfängt und den minimalen Steuersignal-Wert wenigstens während einer bestimmen Ausschaltdauer und einen nicht minimalen Steuersignal-Wert mindestens während einer bestimmten Einschaltdauer an die Ausgabeeinrichtung (A) ausgibt.

9. Steuervorrichtung (SV) nach einem der vorangehenden Ansprüche, **dadurch gekennzeichnet, dass**
die Vergleichseinrichtung (VE) eine Schwellwert-Hysterese aufweist.

10. Steuervorrichtung (SV) nach einem der vorangehenden Ansprüche, **gekennzeichnet durch**
- den mit der ersten Eingangseinrichtung (E1) gekoppelten Drucksensor (DS); und **durch**
- die mit der Ausgangseinrichtung (A) gekoppelte Steuereinrichtung (SE).

11. Steuervorrichtung (SV) nach einem der vorangehenden Anspüche, **dadurch gekennzeichnet, dass**
der minimale Steuersignal-Wert zum Abschalten der Energieversorgung (E) des elektrischen Verbrauchers (EV) geeignet ist.

12. Steuervorrichtung (SV) nach einem der vorangehenden Ansprüche, **dadurch gekennzeichnet, dass**
der maximale Steuersignal-Wert zum Betätigen der Steuereinrichtung (SE) und damit Einschalten der Energieversorgung (E) des elektrischen Verbrauchers (EV) geeignet ist.

13. Steuervorrichtung (SV) nach einem der vorangehenden Ansprüche, **dadurch gekennzeichnet, dass**
der Drucksensor (DS) ein Absolutdrucksensor mit einer Eingabeeinrichtung für geografische Höhendaten ist.

14. Steuervorrichtung (SV) nach einem der Ansprüche 1 bis 12,
**dadurch gekennzeichnet, dass**
der Drucksensor (DS) ein Differenzdrucksensor zum Erfassen einer Druckdifferenz zwischen einem Wasserdruck und einem atmosphärischen Umgebungsdruck ist.

15. Steuervorrichtung (SV) nach einem der vorangehenden Ansprüche, **dadurch gekennzeichnet, dass**
ein oder mehrere Schaltungsteile in einem Mikrocontroller ausgeführt sind.

16. Wasserversorgungssystem mit einer Steuervorrichtung (VS) nach einem der vorangehenden Ansprüche, sowie mit:
- einem an einem Wasserspeicher angeschlossenen Wasserleitungssystem zur Versorgung von Verbrauchern mit Wasser;
- einer über die Steuereinrichtung (SE) an die Versorgungsspannung (V_{S}) angeschlossenen elektrischen Pumpe (EP) zur Erhöhung des Wasserdrucks im Wasserleitungssystem; und mit
- dem zur Erfassung des Wasserdrucks (P) im Wasserleitungssystem vorgesehenen Drucksensor (DS).

## Claims

1. Control device (SV), in particular, pressure switch, with:
- a first input unit (E1) for detecting a pressure signal (Sp) output by a pressure sensor (DS) and a pressure signal (Sp) corresponding to a pressure (P);
- a second input unit (E2) for connecting to a supply voltage (VS);
- an evaluation unit (AE) for evaluating the pressure signal (Sp) and a supply voltage signal corresponding to the supply voltage (VS) and for producing a control signal (S) dependent on the pressure signal (Sp) and the supply voltage signal; and with
- an output unit (A) for output of the control signal (S) to a control unit for controlling the energy supply (EV) of an electrical consumer (V)
**characterised in that**
the control signal (S) depends solely on the pressure signal (SP) and the supply voltage signal as variable parameters; and that
the control signal (S) produced by the evaluation unit (AE) comprises a minimum control signal value, if a pressure signal value (SpW) dependent on the pressure signal ((Sp) is larger than a threshold value (SW), whereby the threshold value (SW) depends solely on the supply voltage signal value as variable parameter.

2. Control device (SV) in accordance with Claim 1.
**characterised in that**.
the evaluation unit (AE) has a comparator unit (VE), to which the threshold value (SW) and the pressure signal value (SpW) can be supplied to produce the control signal (S).

3. Control device (SV) in accordance with Claim 2,
**characterised in that**.
The evaluation unit (AE) produces a digital control signal, whereby the control signal (S) has
a maximum control signal value, if the control signal value (SpW) is smaller than the threshold value.

4. Control device (SV) in accordance with Claim 2,
**characterised in that**
the evaluation unit (AE) produces an analogue control signal, whereby the control signal value depends on the threshold value (SW) and the pressure signal value (SpW), if the pressure signal value (SpW) is smaller than the threshold value.

5. Control device (SV) in accordance with one of the preceding Claims,
**characterised in that**.
The threshold value (SW) and the pressure signal value (SpW) are controllable.

6. Control device (SV) in accordance with one of the preceding Claims,
**characterised by**
an amplifier unit (V) for amplifying the pressure signal (Sp).

7. Control device (SV) in accordance with Claim 6,
**characterised in that**.
the amplifier unit comprises an amplification factor control element.

8. Control device (SV) in accordance with one of the preceding Claims,
**characterised by**
a timing unit connected between the evaluation unit (AE) and the output unit (A), which receives the control signal (S) from the evaluation unit (AE) and outputs the minimum control signal value at least for a specific off-period and a non-minimum control signal value at least during a specific on-period to the output unit (A).

9. Control unit (SV) in accordance with one of the preceding Claims,
**characterised in that**
the comparator unit (VE) has a threshold value hysteresis.

10. Control device (SV) in accordance with one of the preceding Claims,
**characterised by**
- the pressure switch (DS) coupled to the first input unit (E1), and by
- the control unit (SE) coupled to the output unit (A).

11. Control device (SV) in accordance with one of the preceding Claims,
**characterised in that**
the minimum control signal value is suitable for switching off the energy supply (E) of the electrical consumer (EV).

12. Control device (SV) in accordance with one of the preceding Claims,
**characterised in that**.
The maximum control signal value is adapted for operating the control unit (SE) and thus for switching on the energy supply (E) of the electrical consumer (EV).

13. Control device (SV) in accordance with one of the preceding Claims, **characterised in that**.
The pressure sensor (DS) is an absolute pressure sensor with an input unit for geographic height data.

14. Control device (SV) in accordance with one of the Claims 1 to 12,
**characterised in that**.
The pressure sensor (DS) is a differential pressure sensor for detecting a pressure difference between a water pressure and an atmospheric ambient pressure.

15. Control device (SV) in accordance with one of the preceding Claims, **characterised in that**.
one or several circuit parts are implemented in a microcontroller.

16. Water supply system with a control device (VS) in accordance with one of the preceding claims, together with:
- a water pipeline system connected to a water reservoir for supplying consumers with water;
- an electric pump (EP) connected by means of a control unit (SE) to the supply voltage (VS) for increasing the water pressure in the water pipeline system; and with
- the pressure sensor (DS) provided for detecting the water pressure (P) in the water pipeline system.

## Revendications

1. Dispositif de commande (SV), en particulier pressostat, avec :
- un premier dispositif d'entrée (E1) pour détecter un signal de pression (Sp) émis par un capteur de pression (DS) et correspondant à une pression (P) :
- un second dispositif d'entrée (E2) à relier à une tension d'alimentation (VS) ;
- un dispositif d'analyse (AE) pour analyser le signal de pression (Sp) et un signal de tension d'alimentation correspondant à la tension d'alimentation (VS), et pour produire un signal de commande (S) qui dépend du signal de pression (Sp) et du signal de tension d'alimentation ; et avec
- un dispositif de sortie (A) pour envoyer le signal de commande (S) à un dispositif de commande (SE) en vue de commander l'alimentation en énergie (EV) d'un consommateur électrique (V),
**caractérisé**
**en ce que** le signal de commande (S) dépend seulement du signal de pression (SP) et du signal de tension d'alimentation comme grandeurs variables ; et
**en ce que** le signal de commande (S) produit par le dispositif d'analyse (AE) présente une valeur de signal de commande minimale au cas où une valeur de signal de pression (SpW) qui dépend du signal de pression (Sp) est supérieure à une valeur seuil (SW), la valeur seuil (SW) dépendant seulement de la valeur de signal de tension d'alimentation comme grandeur variable.

2. Dispositif de commande (SV) selon la revendication 1, **caractérisé en ce que** le dispositif d'analyse (AE) comporte un dispositif de comparaison (VE) auquel peuvent être transmises la valeur seuil (SW) et la valeur de signal de pression (SpW) pour produire le signal de commande (S).

3. Dispositif de commande (SV) selon la revendication 2, **caractérisé en ce que** le dispositif d'analyse (AE) produit un signal de commande numérique, le signal de commande (S) présentant une valeur de signal de commande maximale au cas où la valeur de signal de pression (Sp) est inférieure à la valeur seuil (SW).

4. Dispositif de commande (SV) selon la revendication 2, **caractérisé en ce que** le dispositif d'analyse (AE) produit un signal de commande analogique, la valeur de signal de commande dépendant de la valeur seuil (SW) et de la valeur de signal de pression (SpW) au cas où la valeur de signal de pression (SpW) est inférieure à la valeur seuil (SW).

5. Dispositif de commande (SV) selon l'une des revendications précédentes, **caractérisé en ce que** la valeur seuil (SW) et la valeur de signal de pression (SpW) sont aptes à être commandées.

6. Dispositif de commande (SV) selon l'une des revendications précédentes, **caractérisé par** un dispositif d'amplification (V) pour amplifier le signal de pression (Sp).

7. Dispositif de commande (SV) selon la revendication 6, **caractérisé en ce que** le dispositif d'amplification (V) comporte un élément de commande de facteur d'amplification.

8. Dispositif de commande (SV) selon l'une des revendications précédentes, **caractérisé par** un dispositif de temporisation, monté entre le dispositif d'analyse (AE) et le dispositif de sortie (A), qui reçoit le signal de commande (S) du dispositif d'analyse (AE) et envoie au dispositif de sortie (A) la valeur de signal de commande minimale au moins pendant une durée d'arrêt définie, et une valeur de signal de commande non minimale au moins pendant une durée de marche définie.

9. Dispositif de commande (SV) selon l'une des revendications précédentes, **caractérisé en ce que** le dispositif de comparaison (VE) présente une hystérésis de valeur de seuil.

10. Dispositif de commande (SV) selon l'une des revendications précédentes, **caractérisé par**
- le capteur de pression (DS) couplé au premier dispositif d'entrée (E1) et par
- le dispositif de commande (SE) couplé au dispositif de sortie (A).

11. Dispositif de commande (SV) selon l'une des revendications précédentes, **caractérisé en ce que** la valeur de signal de commande minimale est apte à arrêter l'alimentation en énergie (E) du consommateur électrique (EV).

12. Dispositif de commande (SV) selon l'une des revendications précédentes, **caractérisé en ce que** la valeur de signal de commande maximale est apte à actionner le dispositif de commande (SE) et, ainsi, à mettre en marche l'alimentation en énergie (E) du consommateur électrique (EV).

13. Dispositif de commande (SV) selon l'une des revendications précédentes, **caractérisé en ce que** le capteur de pression (DS) est constitué par un capteur de pression absolue avec un dispositif d'entrée pour des données géographiques d'altitude.

14. Dispositif de commande (SV) selon l'une des revendications 1 à 12, **caractérisé en ce que** le capteur de pression (DS) est constitué par un capteur de pression différentielle pour détecter une différence de pression entre une pression d'eau et une pression ambiante atmosphérique.

15. Dispositif de commande (SV) selon l'une des revendications précédentes, **caractérisé en ce qu'**un ou plusieurs éléments de circuit sont réalisés dans un microcontrôleur.

16. Système d'alimentation en eau avec un dispositif de commande (SV) selon l'une des revendications précédentes, et avec :
- un système de canalisation d'eau, raccordé à un réservoir d'eau, pour alimenter en eau des consommateurs ;
- une pompe électrique (EP), raccordée par le dispositif de commande (SE) à la tension d'alimentation (V_{S}), pour augmenter la pression d'eau dans le système de canalisation d'eau ; et
- le capteur de pression (DS) prévu pour détecter la pression d'eau (P) dans le système de canalisation d'eau.
